# EUROPÄISCHE PATENTSCHRIFT

(11) **EP 2 480 940 B1**
(45) Veröffentlichungstag und Bekanntmachung des Hinweises auf die Patenterteilung: **05.04.2017**
(21) Anmeldenummer: 10762867.9
(22) Anmeldetag: 21.09.2010
(51) Int. Cl.: G05B 19/042

(54) **VERFAHREN ZUM BEREITSTELLEN VON SICHERHEITSFUNKTIONEN**
METHOD FOR PROVIDING SAFETY FUNCTIONS
PROCÉDÉ DE MISE À DISPOSITION DE FONCTIONS DE SÉCURITÉ

(30) Priorität: 23.09.2009 DE 102009042355; 02.08.2010 DE 102010033039
(43) Veröffentlichungstag der Anmeldung: 01.08.2012
(73) Patentinhaber: Phoenix Contact GmbH & Co. KG, 32825 Blomberg (DE)
(72) Erfinder: HORN, Steffen, 32825 Blomberg (DE)
(74) Vertreter: Mergel, Volker
(86) Internationale Anmeldenummer: PCT/EP2010/005767
(87) Internationale Veröffentlichungsnummer: WO 2011/035881

(56) Entgegenhaltungen:
- EP-A2- 0 718 727
- WO-A2-2004/095716
- US-A- 6 021 357

## Beschreibung

Die vorliegende Erfindung betrifft ein Verfahren zum sicheren Bereitstellen von Sicherheitsfunktionen für sichere Geräte eines Automatisierungssystems, sowie ein Automatisierungssystem zur Anwendung des Verfahrens.

In der Automatisierungstechnik ist es häufig notwendig, Sicherheitsfunktionen zum Schutz von Mensch, Maschine oder Umwelt zu realisieren, wie die Abschaltung einer Maschine nach Öffnen einer Schutztür oder Betätigung eines Not-Aus-Schalters. Dafür werden konventionelle Sicherheitskonzepte zunehmend durch in fehlersicheren Automatisierungssystemen eingebettete Sicherheitsfunktionen ersetzt. Diese Systeme umfassen dezentral am Netzwerk eines Automatisierungs-Bussystems, d.h. an einem Feldbussystem, angeschaltete fehlersichere Teilnehmer wobei in den Teilnehmern in der Regel sowohl die eigentlichen Sicherheitsfunktionen, als auch die Fehlererkennenden und Fehlerbeherrschenden Maßnahmen realisiert sind. Nach dem aktuellen Stand der Technik müssen diese Maßnahmen den in den Standards IEC 61508, ISO 13849, etc. festgelegten Mechanismen entsprechen.

In derzeitigen automatisierten Anlagen werden abhängig vom Automatisierungsgrad und von der Ausdehnung der Anlagen Kommunikationssysteme verwendet, die dezentrale Eingabe/Ausgabe-Geräte (E/A-Geräte) und Steuerungen verbinden. Die E/A-Geräte und Steuerungen können Standardteilnehmer, als auch Teilnehmer mit Sicherheitsfunktionen sein. Für den Transport von sicherheitstechnischen Daten über gemeinsame Kommunikationssysteme ist bekannt, das Netzwerk durch sichere Netzwerkprotokolle zu unterstützen. Die Steuerung von Standardfunktionen und von Sicherheitsfunktionen kann über ein gemeinsames Netzwerk sowohl durch eine zentrale Struktur mit einer Standard- und Sicherheitssteuerung realisiert werden, als auch durch dezentrale Steuerungs- und Sicherheitslogiken, die im Netzwerk eines Kommunikations- bzw. Feldbussystems verteilt sind.

Eine Anforderung an die als Teilnehmer eines fehlersicheren Kommunikationssystems für die Automatisierungstechnik zu verwendenden E/A-Geräte und Steuerungen ist, dass diese unabhängig von einem jeweiligen Netzwerk und der jeweiligen Steuerung sind, so dass die Sicherheitstechnik, d.h. die sicheren Teilnehmer, beim einem Wechsel einer Standard-Steuerung und/oder eines Netzwerks weiterverwendet werden können. Für eine solche Weiterverwendungsmöglichkeit ist es notwendig, eine möglichst einfache Handhabbarkeit solcher fehlersicheren Automatisierungssysteme bereitzustellen. Die Sicherheitsfunktionen eines Automatisierungssystems bzw. einer Anlage werden hierzu von den Standard-Funktionen getrennt bereitgestellt und in kleine überschaubare lokal begrenzte Module aufgeteilt. Diese Modularisierung der Sicherheitsfunktionen sowie ihre Trennung von den Standard-Funktionen ermöglicht ein einfaches Verifizieren der einzelnen Module und entspricht somit den Anforderungen aktueller Sicherheitsstandards. Außerdem entspricht dieses der Denkweise des mit dem Gebiet der Sicherheitstechnik vertrauten Fachmanns.

Komplette Anlagen bzw. Maschinen setzen sich immer häufiger aus einer Vielzahl einzelner und teilweise autark arbeitender Anlagen- bzw. Maschinenteilen zusammen, die erst nach ihrer Auslieferung beim Endkunden zusammengesetzt und in Betrieb genommen werden. Bei diesen modular aus einzelnen Teilen aufgebauten Anlagen müssen die gesamten, d.h. die Anlagenübergreifenden Sicherheitsfunktionen vor Inbetriebnahme und nach einer Umrüstung bzw. nach einer flexiblen Erweiterung validiert werden, um eine Korrektheit der Sicherheitsfunktionen zu gewährleisten.

Gemäß dem heutigen Stand der Technik müssen die endgültigen Anpassungen der sicherheitsrelevanten Parameter und der Programmierung in den sicheren Teilnehmern sowie der Validierungsprozess für eine korrekte Sicherheitsfunktion direkt in der Inbetriebnahmephase durchgeführt werden. Die heutigen dezentralen und modularen Sicherheitsfunktionen erfordern den Einsatz spezieller fehlersicherer Programmierwerkzeuge, mit denen die Sicherheitsprogramme und Sicherheitsparameter direkt in die sicheren Steuerungen bzw. in die sicheren E/A-Geräte geladen werden. Im Falle von Modifikationen, Anpassungen oder Erweiterungen eines bestehenden Automatisierungssystems ist in der Regel ein erneuter vor Ort Einsatz der speziellen fehlersicheren Programmierwerkzeuge notwendig, mit denen ein erneutes Nachladen und Validieren erfolgt. Die nach dem Stand der Technik üblichen Ansätze für eine Validierung der Sicherheitsfunktion während einer Inbetriebnahme erfordern einen zeitintensiven Personaleinsatz, mit einem für den Umgang mit den sicherheitsrelevanten Programmierwerkzeugen qualifizierten Personal, und sind daher kostenintensiv.

Dokument WO 2004/095716 A2 zeigt ein System und eine Methode für die Implementierung von sicherheitsinstrumentierten Systemen in eine Feldbus-Architektur.

Der Erfindung liegt die Aufgabe zugrunde, ein gegenüber dem Stand der Technik flexibles und optimiertes Verfahren bereitzustellen, mit dem die Sicherheitsfunktionen in Form von Sicherheitsbausteinen für eine Anzahl eindeutig adressierbarer sicherer Geräte im einem Netzwerk eines Automatisierungssystems computergestützt entworfen, validiert und in die sicheren Geräte geladen werden.

Zur Lösung dieser Aufgabe schlägt die vorliegende Erfindung vor, modulare Sicherheitsbausteine für eine Anzahl sicherer Geräte eines Automatisierungssystems zu erstellen, wobei ein modularer Sicherheitsbaustein eine Kombination aus einem adressenunabhängigen Logikmodul, einem adressenabhängigen Parametermodul und einer über beide Module berechnete fehlersichere Informationen enthält.

Unter dem Begriff eines sicheren Geräts sind im Sinne der Erfindung beispielsweise die E/A-Geräte und Steuerungen zu verstehen, mit denen sicherheitsrelevante Funktionen in einem Automatisierungssystem gesteuert bzw. realisiert werden. Insbesondere kann die Anzahl von Geräten eines Systems als Teilnehmer in einem Kommunikationsnetzwerk miteinander in Verbindung stehen und sicherheitsgerichtete Daten sicher miteinander austauschen.

In einem ersten Verfahrensschritt wird eine Anzahl von Sicherheitsbausteinen erstellt. Das Erstellen der Bausteine erfolgt mit einem fehlersicheren Programmierwerkzeug, wobei die logischen Funktionen computergestützt entworfen und in den Logikmodulen abgelegt werden. Diese Logikmodule können für verschiedene Geräte mit identischer Sicherheitsfunktion im Automatisierungssystem verwendet werden und sind somit adressunabhängig. Die Parametermodule werden hingegen immer für einen konkreten Sicherheitsbaustein eines bestimmten und eindeutig adressierbaren sicheren Gerätes erzeugt, und enthalten somit adressabhängige Daten. Diese können Quell- und Zieladressen von Sicherheitskommunikationsbeziehungen sein, die ein sicheres Gerät für die Kommunikation im Netzwerk benötigt. Die fehlersichere Information beinhaltet redundante Informationen, z.B. Checksummen, die über Logik- und Parametermodule berechnet worden sind, sowie weitere Maßnahmen gemäß genannter Normen.

Das erfindungsgemäße Verfahren führt mit den modularen Sicherheitsbausteinen eine klare Trennung zwischen den adressabhängigen Parametern und der in einem gesamten System mehrfachverwendbaren adressunabhängigen Logik ein.

In einem zweiten Verfahrensschritt werden die erzeugten Sicherheitsbausteine gespeichert, wobei die Module und die fehlersichere Informationen einzeln gespeichert werden. Für jeden erzeugten Sicherheitsbaustein wird eine Wiederherstellungsinformation gespeichert.

Die Speicherung der Logik- und Parametermodule sowie die fehlersicheren Informationen erfolgt in einem beliebigen Speicher, der grundsätzlich keine sicherheitsgerichteten Maßnahmen beherrschen muss. Die Daten zur Wiederherstellung der modulweise gespeicherten Sicherheitsbausteine werden ebenfalls mit dem fehlersicheren Programmierwerkzeug abgespeichert. Die Wiederherstellungsinformation können im Prinzip auch tabellarisch als Anlagenkonfiguration ausgegeben werden.

In einem dritten Verfahrensschritt wird nach Anschalten eines sicheren Gerätes an das Automatisierungssystem der für das Gerät erstellte Sicherheitsbaustein mit Hilfe der Wiederherstellungsinformation aus den zugehörigen Logik- und Parametermodulen sowie der zugehörigen fehlersicheren Informationen wiederhergestellt und an das sichere Gerät übertragen.

Im Vergleich zum Stand der Technik erfolgt das Laden der Sicherheitsbausteine nun insbesondere nicht direkt nach ihrem Erstellen mit dem fehlersicheren Programmierwerkzeug, sondern erst bei der Inbetriebnahme des Automatisierungssystems, dessen Sicherheitsfunktionen dezentral im Netzwerk bereitstehen. Ein wesentlicher Vorteil des erfindungsgemäßen Verfahrens ist, dass das Einspielen der Sicherheitsbausteine in die sicheren Geräte zusammen mit dem Einspielen der Bausteine für die Standard E/A-Geräte und Steuerungen unmittelbar zur Inbetriebnahme eines Automatisierungssystems erfolgen kann. Das Einspielen sämtlicher Funktionen kann einheitlich mit einem computergestützten Programmierwerkzeug erfolgen, das keinerlei sicherheitsgerichtete Maßnahmen unterstützen braucht.

Die Wiederherstellung der jeweiligen Sicherheitsbausteine erfolgt insbesondere dadurch, dass das computergestützte Programmierwerkzeug die Wiederherstellungsinformation verarbeitet und die gespeicherten Module und fehlersicheren Informationen automatisch zusammengesetzt werden.

Alternativ kann das Zusammensetzen der Module auch manuell mit dem nicht fehlersicheren Programmierwerkzeug an Hand der tabellarischen Anlagenkonfiguration erfolgen.

In einer bevorzugten Ausführung des Verfahrens wird die Übermittlung eines Sicherheitsbausteins durch das jeweilige bestimmte sichere Gerät angefordert.

Somit ist möglich, dass z.B. ein nicht parametriertes sicheres Gerät als Austauschgerät an das Netzwerk auch nach Inbetriebnahme des Automatisierungssystems angeschlossen werden kann, so dass ohne manuelle Eingriffe ein bestimmter Sicherheitsbaustein von der Standard-Steuerung nachgeladen werden kann.

In einem vierten und letzten Verfahrensschritt wird die Richtigkeit des übertragenen Sicherheitsbausteins in das sichere Gerät mittels der zugehörigen fehlersicheren Information überprüft.

Die sicheren Geräte können diverse Prüfungen zum Beispiel auf Plausibilität, Konsistenz, gültige Kombination oder Version an Hand der Quell- und Zieladressen im Parametermodul eigenständig durchführen und alle Fehler erkennen, die während der Speicherung und dem Kombinieren sowie dem Laden der Sicherheitsbausteine in das jeweilige Gerät auftreten können. Bei dem Erkennen eines Fehlers, der grundsätzlich jede Art von verfälschten oder vertauschten Daten sein kann, wird von dem jeweiligen sicheren Gerät eine sicherheitsgerichtete Reaktion ausgeführt, in dem es zum Beispiel einen sicheren Zustand einnimmt. Insbesondere können ungültige Kombinationen von Logik- und Parametermodulen während der Wiederherstellung der Sicherheitsbausteine zuverlässig erkannt werden. Somit ist gewährleistet, dass nur mit dem fehlersicheren Programmierwerkzeug validierte Kombinationen von den sicheren Geräten akzeptiert werden.

Als Speicher, in dem die Logik- und Parametermodule sowie die sicheren Informationen abgelegt werden, kann insbesondere ein Standardspeichermedium verwendet werden, das keinerlei sicherheitsgerichtete Maßahmen beim Speichern bereitstellen muss.

Ein solcher nicht sicherer Speicher wird bevorzugt von einer nicht sicheren Standard-Steuerung des jeweiligen Automatisierungssystems bereitgestellt. Hierdurch wird ein automatischer Download von Sicherheitsbausteinen aus einer zentralen Steuerung in die sicheren Geräte ermöglicht, so dass die Geräte grundsätzlich nicht auf einen remanenten internen Speicher angewiesen sind. Ein weiter Vorteil stellt die Update- und Upgradefähigkeit bei einer eventuellen Erweiterung des Automatisierungssystems dar.

In einer weiteren besonders bevorzugten Ausführung des erfindungsgemäßen Verfahrens werden beim Speichern eines zweiten und jedes weiteren Sicherheitsbausteines die zugehörigen Logikmodule nur dann durch das fehlersichere Programmierwerkzeug gespeichert, wenn zuvor kein identisches Logikmodul gespeichert wurde.

Ein wesentlicher Vorteil des erfindungsgemäßen Verfahrens ist, dass die gespeicherten Logikmodule, mehrfach für verschiedene modulare Sicherheitsbausteine verwendet werden können und daher nur einmal in dem nicht sicheren Speicher abgelegt werden müssen. Insbesondere bei kleinen Steuerungen kann somit wertvoller und begrenzter Speicherplatz eingespart werden.

Im Folgenden wird die Erfindung anhand von einem Ausführungsbeispiel und unter Bezugnahme auf die Figuren näher erläutert. In den Figuren zeigen:
- Fig. 1: Aufteilung der modularen Sicherheitsbausteine einer dezentralen Sicherheitssteuerung in adressenunabhängige Logikmodule und adressenabhängige E/A-Parametermodule,
- Fig. 2: Aufbau modularer Sicherheitsbausteine aus Logik- und Parametermodulen aus vorab validierten Kombinationsmöglichkeiten.

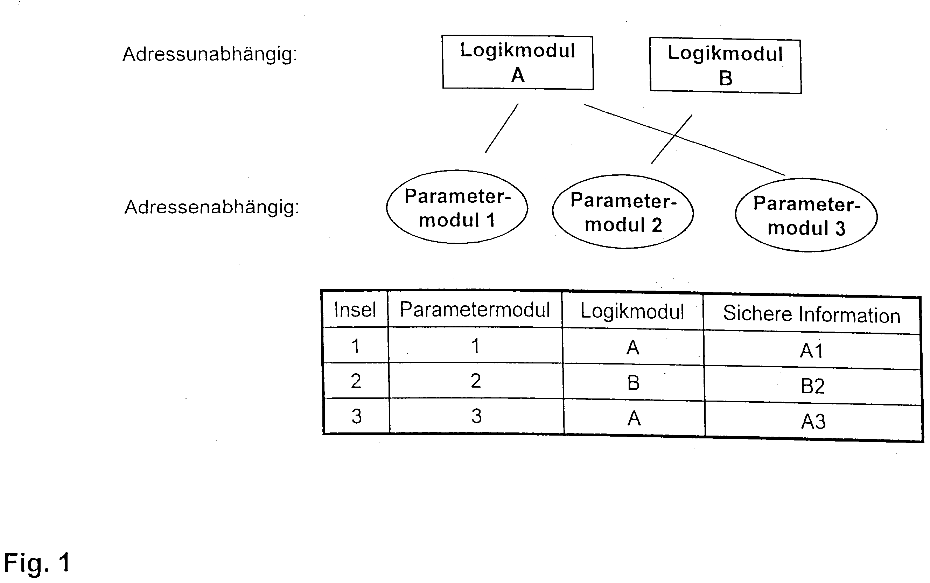

In der Figur 1 ist die prinzipielle Aufbauweise von modularen Sicherheitsbausteinen zum Bereitstellen von Sicherheitsfunktionen in einem Automatisierungssystem dargestellt, das aus einer Anzahl modular zusammengesetzter Anlagenteile aufgebaut ist und eine dezentrale Sicherheitssteuerung umfasst. Eine solche dezentrale Sicherheitssteuerung besteht beispielsweise aus einer Anzahl von sicheren Eingabe/Ausgabe-Geräten (E/A-Geräten) sowie sicheren bzw. fehlersicheren Steuerungen, die bevorzugt auch mit anderen nicht fehlersicheren Geräten an einem gemeinsamen Automatisierungs-Bussystem betrieben werden.

Bei modular aufgebauten Automatisierungssystemen, die eine Anzahl von autarken Anlagenteilen bzw. Maschinen umfasst, ist grundsätzlich auch ein logisch strukturierter Aufbau der dezentralen Sicherheitsfunktionen erforderlich. Dazu werden die Sicherheitsfunktionen ihrer Projektierung zu einzelnen Sicherheitsinseln zusammengefasst, wobei eine jeweilige Insel einem bestimmten Anlagenteil bzw. einer bestimmten Maschine zugeordnet wird.

Die Sicherheitsfunktionen der Sicherheitsinsel werden aus modularen und dezentral verteilten sicheren Steuerungen und sicheren E/A-Geräten bereitgestellt, in die ein Sicherheitsbaustein geladen wird. Sämtliche inselinternen sowie inselübergreifenden Geräte können bevorzugt an einer gemeinsamen linienförmigen Busleitung angeschlossen sein.

Die Steuerungen stehen logisch mit ihren bezüglich der Adressierung untergeordneten E/A-Geräten in direkter Verbindung, wobei die Kommunikation im gesamten Netzwerk eines Automatisierungssystems oder zumindest in einem übergeordneten Abschnitt durch einen Kommunikationsmaster gesteuert wird, der auch einen inselübergreifenden Austausch von sicherheitsrelevanten Daten ermöglicht.

Wie der Figur 1 zu entnehmen ist, werden die modularen Sicherheitsbausteine in adressenunabhängige Logikmodule und in adressenabhängige Parametermodule aufgeteilt, wobei die Parametermodule eine jeweilige Inselnummer, d.h. einen jeweiligen Adressenraum einer sicheren Steuerung und den zugeordneten E/A-Geräten innerhalb einer Sicherheitsinsel enthält.

In den Logikmodulen werden die Sicherheitslogik der Steuerung und die Kanalbelegung von Steuerung und E/A-Geräten einer Sicherheitsinsel definiert. Die Logikmodule von zwei Inseln können zu einem Projekt zusammengefasst werden, sofern die Sicherheitslogik und die Kanalbelegung der Geräte innerhalb beider Inseln exakt identisch ist, so dass der einzige Unterschied zwischen den Inseln in ihrer Adresse besteht.

Mit der Standard-Steuerung des Automatisierungssystems, in der die Logikmodule mit der Sicherheitslogik und der Kanalbelegung sowie die Parametermodule mit der jeweiligen Inseladresse abgelegt sind, werden die beiden Module zu gültigen Sicherheitsbausteinen kombiniert, und mit einer sicheren, redundanten Information abgesichert. Mit der Standard-Steuerung werden die Sicherheitsbausteine über das Netzwerk an die konkret adressierte Insel gesendet.

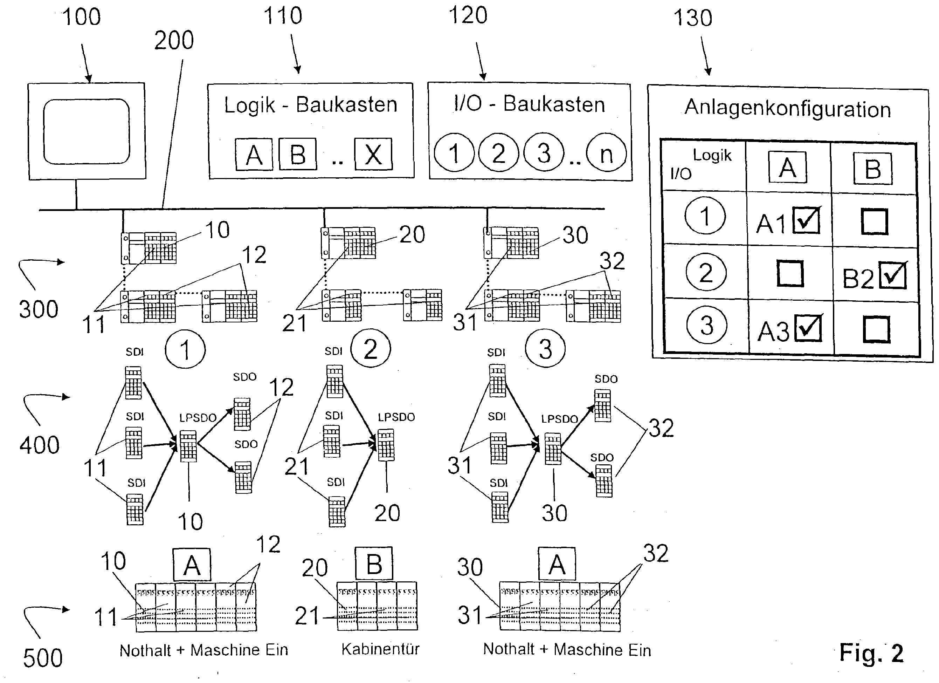

Anhand der Figur 2 wird verdeutlicht, wie innerhalb einer Standard-Steuerung 100, beispielsweise ein PC oder eine SPS, verschiedene Logikmodule A, B, ... X eines Logik-Baukastens 110 mit adressenabhängigen Parametermodulen 1, 2, 3, ... n eines I/O-Baukastens 130 gehandhabt werden können. Die vorab mit einem sicheren computergestützten Programmierwerkzeug validierten Kombinationen von Logik- und Parametermodulen A1, B2 und A3 sind in der Anlagenkonfiguration 130 erfasst, die somit die notwendige Wiederherstellungsfunktion für die gültigen Kombinationen enthält.

Die Logikmodule A, B, ..., X und die Parametermodule 1, 2, 3, ..., n werden mit den sicheren Informationen als Datensätze in der Standard-Steuerung 100 abgelegt. Die Standard-Steuerung wird mit einem Standard-Programmierwerkzeug konfiguriert und ist somit in die Lage versetzt, die gespeicherten Logikmodule mit den Parametermodulen zu gültigen Kombinationen zusammenzufassen. Die gemäß der Anlagenkonfiguration 130 gültigen Kombinationen werden mit der jeweilig gültigen und ebenfalls in der Standard-Steuerung gespeicherten sicheren Informationen abgesichert und über das Netzwerk 200 an die Sicherheitsinseln adressiert und versendet, wobei die Adressen der Inseln mit einem jeweilig gültigen Parametermodul 1, 2, 3, ..., n übereinstimmen. Die Adressen der sicheren Geräte werden beispielweise bei ihrer Installation hardwaremäßig eingestellt.

Die Sicherheitsinseln 1, 2, 3, ..., n beinhalten jeweils eine sichere Steuerung (LPSDO) 10, 20, 30 sowie eine Anzahl von sicheren Eingangsgeräten (SDI) 11, 21, 31 und eventuell eine Anzahl sicherer Ausgangsgeräte (SDO) 12, 32.

Die Datenflussansicht 400 zeigt den logischen Datenfluss innerhalb einer sicheren Insel 1, 2, 3, ..., n, wobei die Daten von den Eingangsgeräten (SDI) zu den sicheren Steuerungen (LPSDO) einer jeweiligen Insel gesendet werden. Eine jeweilige LPSDO verarbeitet die empfangenen Daten und sendet Steuerbefehle an die Ausgangsgeräte (SDO) innerhalb einer Insel. Die sicheren Steuerungen 10, 20, 30 können sichere Informationen untereinander austauschen und stellen somit eine inselübergreifende Sicherheitsfunktion bereit.

Aus der Gerätesicht 500 wird verdeutlicht, dass dem Anwender bei dem Konfigurieren einer Sicherheitsinsel in seinem sicheren Programmierwerkzeug lediglich eine kompakte und somit übersichtliche Sicherheitssteuerung dargestellt wird. Bei der Konfiguration muss somit der hardwaremäßig dezentrale Aufbau sowie der damit verbundene Datenverkehr auf dem Netzwerk nicht berücksichtigt werden.

## Patentansprüche

1. Verfahren zum computergestützten Bereitstellen von modularen Sicherheitsbausteinen für eine Anzahl eindeutig adressierbarer sicherer Geräte (10, 11, 12, 20, 21, 30, 31, 32) zum Erzielen von Sicherheitsfunktionen in einem Netzwerk (200) eines Automatisierungssystems,
wobei ein modularer Sicherheitsbaustein eine Kombination aus einem adressenunabhängigen Logikmodul (A, B, ..., X), einem adressenabhängigen Parametermodul (1, 2, ..., n) und einer fehlersicheren Information enthält,
wobei die fehlersichere Information über das adressenunabhängige Logikmodul und das adressenabhängige Parametermodul berechnet wird,
mit folgenden Verfahrensschritten:
a) Erstellen einer Anzahl von Sicherheitsbausteinen;
b) Speichern der Sicherheitsbausteine, wobei die Module und die fehlersicheren Informationen einzeln gespeichert werden, und wobei für jeden Sicherheitsbaustein eine Wiederherstellungsinformation gespeichert wird, und wobei die Module und die fehlersicheren Informationen in einem nicht sicheren Speicher gespeichert werden, wobei der nicht sichere Speicher von einer nicht sicheren Standard-Steuerung des Automatisierungssystems bereitgestellt wird;
c) nach Anschalten eines sicheren Gerätes an dem Automatisierungssystem wird der für das Gerät erstellte Sicherheitsbaustein mit Hilfe der Wiederherstellungsinformation aus den zugehörigen Logik- und Parametermodulen sowie der zugehörigen fehlersicheren Informationen wiederhergestellt und an das sichere Gerät übertragen;
d) Überprüfen der Richtigkeit des übertragenen Sicherheitsbausteins in dem sicheren Gerät mittels der zugehörigen fehlersicheren Information.

2. Verfahren gemäß vorstehendem Anspruch, **dadurch gekennzeichnet, dass** mit der nicht sicheren Standard-Steuerung des Automatisierungssystems die gespeicherte Widerherstellungsinformation für jedes der sicheren Geräte verarbeitet wird, so dass die Logik- und Parametermodule sowie die fehlersicheren Informationen aus dem Speicher der Steuerung abgerufen und computergestützt jeweils zum Sicherheitsbaustein eines jeweiligen sicheren Geräts zusammengesetzt werden, und jeder Sicherheitsbaustein an das jeweilig bestimmte sichere Gerät adressiert übermittelt wird.

3. Verfahren gemäß dem vorstehenden Anspruch, **dadurch gekennzeichnet, dass** die Übermittlung eines Sicherheitsbausteins durch das jeweilige sichere Gerät angefordert wird.

4. Verfahren gemäß einem der vorstehenden Ansprüche, **dadurch gekennzeichnet, dass** beim Speichern eines zweiten und jedem weiteren Sicherheitsbausteines die zugehörigen Logikmodule nur dann gespeichert werden, wenn zuvor kein identisches Logikmodul gespeichert wurde.

5. Automatisierungssystem umfassend ein Netzwerk (200) aus einer Anzahl eindeutig adressierbarer sicherer Geräte (10, 11, 12, 20, 21, 30, 31, 32) und einer Anzahl modularer Sicherheitsbausteine, wobei die Anzahl der modularen Sicherheitsbausteine der Anzahl der eindeutig adressierbaren sicheren Geräten entspricht und wobei ein modularer Sicherheitsbaustein eine Kombination aus einem adressenunabhängigen Logikmodul (A, B, ..., X), einem adressenabhängigen Parametermodul (1, 2, ..., n) sowie einer fehlersicheren Information enthält, wobei
die fehlersichere Information über das adressenunabhängige Logikmodul und das adressenabhängige Parametermodul berechnet wird,
die Logik- und Parametermodule sowie die fehlersicheren Informationen der jeweiligen Sicherheitsbausteine zusammen mit einer Wiederherstellungsinformation in einem Speicher derart gespeichert sind, dass
nach Anschalten eines sicheren Gerätes ein für dieses jeweilige sichere Gerät erstellter Sicherheitsbaustein mit Hilfe der Wiederherstellungsinformation aus den zugehörigen Logik- und Parametermodulen sowie der zugehörigen fehlersicheren Information aus dem Speicher wiederherstellbar und an das sichere Gerät übertragbar ist, und die Richtigkeit des übertragenen modularen Sicherheitsbausteins in dem sicheren Gerät mittels der zugehörigen fehlersicheren Information überprüfbar ist,
wobei der Speicher ein nicht sicherer Speicher ist und
wobei der nicht sichere Speicher von einer nicht sicheren Standard-Steuerung (100) umfasst ist.

6. Automatisierungssystem gemäß vorstehendem Anspruch, **dadurch gekennzeichnet, dass** die nicht sichere Standard-Steuerung ausgebildet ist, die gespeicherten Widerherstellungsinformationen zu verarbeiten und die Logik- und Parametermodule sowie die fehlersicheren Informationen aus ihrem Speicher abzurufen und für jedes sichere Gerät jeweils einen Sicherheitsbaustein zusammenzusetzen und jeden der Sicherheitsbausteine an das jeweilig bestimmte sichere Gerät adressiert zu übermitteln.

7. Automatisierungssystem gemäß vorstehendem Anspruch, **dadurch gekennzeichnet, dass** das jeweilig bestimmte sichere Gerät ausgebildet ist, die Übermittlung eines Sicherheitsbausteins anzufordern.

8. Automatisierungssystem gemäß einem der vorstehenden Ansprüche, **dadurch gekennzeichnet, dass** aus einer Anzahl von identischen Logikmodulen jeweils nur ein Modul in dem Speicher gespeichert ist.

## Claims

1. A method for the computerized provision of modular safety components for a number of uniquely addressable safety devices (10, 11, 12, 20, 21, 30, 31, 32) for achieving safety functions in a network (200) of an automation system, wherein a modular safety component contains a combination of an address-independent logic module (A, B, ..., X), an address-dependent parameter module (1, 2, .... n) and a failsafe information,
wherein the failsafe information is calculated via the address-independent logic module and the address-dependent parameter module,
comprising the following method steps:
a) Creating a number of safety components;
b) Storing of the safety components, wherein the modules and the failsafe information are stored individually, and wherein for each safety component recovery information is stored, and wherein the modules as well as the failsafe information are stored in a non-safe storage, wherein the non-safe storage is provided by a non-safe standard controller of the automation system;
c) After connecting a safety device to the automation system, the safety component created for the device is restored by means of the recovery information from the associated logic and parameter modules as well as the failsafe information and is transmitted to the safety device;
d) Checking for accuracy of the transmitted safety component in the safety device by means of the associated failsafe information.

2. The method according to the preceding claim, **characterized in that** with the non-safe standard controller of the automation system, the stored recovery information for each of the safety devices is processed so that the logic and parameter modules as well as the failsafe information are retrieved from the storage of the controller and are in each case composed in a computerized manner to form the safety component of a respective safety device, and each safety component is addressed and transmitted to the respective specific safety device.

3. The method according to the preceding claim, **characterized in that** transmitting a safety component is requested by the respective safety device.

4. The method according to any of the preceding claims, **characterized in that** when storing a second and any further safety component, the associated logic modules are only stored if previously no identical logic module was stored.

5. An automation system, comprising a network (200) consisting of a number of uniquely addressable safety devices (10, 11, 12, 20, 21, 30, 31, 32) and a number of modular safety components, wherein the number of modular safety components corresponds to the number of the uniquely addressable safety devices, and wherein a modular safety component contains a combination of an address-independent logic module (A, B, ..., X), an address-dependent parameter module (1, 2, ...., n) and a failsafe information, wherein
the failsafe information is calculated via the address-independent logic module and the address-dependent parameter module,
the logic and parameter modules as well as the failsafe information of the respective safety components are stored together with recovery information in a storage in such a manner that
after connecting a safety device, a safety component created for this respective safety device can be restored by means of the recovery information from the associated logic and parameter modules as well as the associated failsafe information from the storage and can be transmitted to the safety device, and the accuracy of the transmitted modular safety component in the safety device can be checked by means of the associated failsafe information,
wherein the storage is a non-safe storage and
wherein the non-safe storage is comprised by a non-safe standard controller (100).

6. The automation system according to the preceding claim, **characterized in that** the non-safe standard controller is configured so as to process the stored recovery information and to retrieve the logic and parameter modules as well as the failsafe information from its storage, and to compose for each safety device in each case a safety component and to transmit each of the safety components addressed to the respective specific safety device.

7. The automation system according to the preceding claim, **characterized in that** the respective specific safety device is configured to request the transmission of a safety component.

8. The automation system according to any of the preceding claims, **characterized in that** from a number of identical logic modules, in each case only one module is stored in the storage.

## Revendications

1. Procédé de mise à disposition assistée par ordinateur de fonctions de sécurité modulaires pour un certain nombre d'appareils (10, 11, 12, 20, 21, 30, 31, 32) sûrs, adressables de façon univoque, aux fins d'obtenir des fonctions de sécurité dans un réseau (200) d'un système d'automatisation,
selon lequel une fonction de sécurité modulaire comporte une combinaison d'un module logique (A, B, ..., X) indépendant d'une adresse, d'un module de paramètres (1, 2, ..., n) dépendant d'une adresse et d'une information à sécurité intégrée,
selon lequel l'information à sécurité intégrée est calculée par l'intermédiaire du module logique indépendant d'une adresse et du module de paramètres dépendant d'une adresse,
comprenant les étapes de procédé suivantes :
a) création d'un certain nombre de fonctions de sécurité ;
b) enregistrement des fonctions de sécurité, sachant que les modules et les informations à sécurité intégrée sont enregistrés individuellement et qu'une information de restauration est enregistrée pour chaque fonction de sécurité et que les modules et les informations à sécurité intégrée sont enregistrés dans une mémoire non sûre, la mémoire non sûre étant mise à disposition par une commande standard non sûre du système d'automatisation ;
c) après la connexion d'un appareil sûr au système d'automatisation, la fonction de sécurité créée pour l'appareil est restaurée à l'aide de l'information de restauration, à partir des modules logiques et de paramètres associés ainsi que des informations à sécurité intégrée, et est transmise à l'appareil sûr ;
d) vérification de l'exactitude de la fonction de sécurité transmise dans l'appareil sûr, au moyen de l'information associée à sécurité intégrée.

2. Procédé selon la revendication précédente, **caractérisé en ce que**, avec la commande standard non sûre du système d'automatisation, l'information de restauration enregistrée est traitée pour chacun des appareils sûrs, de sorte que les modules logiques et de paramètres ainsi que les informations à sécurité intégrée sont extraits de la mémoire de la commande et sont assemblés, de manière assistée par ordinateur, pour obtenir respectivement la fonction de sécurité d'un appareil sûr respectif, et que chaque fonction de sécurité est transmise en étant adressée à l'appareil sûr respectivement défini.

3. Procédé selon la revendication précédente, **caractérisé en ce que** la transmission d'une fonction de sécurité est demandée par l'appareil sûr respectif.

4. Procédé selon l'une des revendications précédentes, **caractérisé en ce que** lors de l'enregistrement d'une deuxième fonction de sécurité et de chaque fonction de sécurité supplémentaire, les modules logiques associés ne sont enregistrés que si auparavant aucun module logique identique n'a été enregistré.

5. Système d'automatisation comprenant un réseau (200) constitué d'un certain nombre d'appareils (10, 11, 12, 20, 21, 30, 31, 32) sûrs, adressables de façon univoque, et d'un certain nombre de fonctions de sécurité modulaires, sachant que le nombre des fonctions de sécurité modulaires correspond au nombre des appareils sûrs, adressables de façon univoque, et sachant qu'une fonction de sécurité modulaire comporte une combinaison d'un module logique (A, B, ..., X) indépendant d'une adresse, d'un module de paramètres (1, 2, ..., n) dépendant d'une adresse et d'une information à sécurité intégrée, sachant que
l'information à sécurité intégrée est calculée par l'intermédiaire du module logique indépendant d'une adresse et du module de paramètres dépendant d'une adresse,
les modules logiques et de paramètres ainsi que les informations à sécurité intégrée des fonctions de sécurité respectives sont enregistrés dans une mémoire, conjointement avec une information de restauration, de manière à ce que
après la connexion d'un appareil sûr, une fonction de sécurité créée pour cet appareil sûr respectif puisse être restaurée à l'aide de l'information de restauration, à partir des modules logiques et de paramètres associés ainsi que de l'information à sécurité intégrée associé, et puisse être transmise à l'appareil sûr, et que l'exactitude de la fonction de sécurité modulaire transmise puisse être vérifiée dans l'appareil sûr au moyen de l'information à sécurité intégrée associée,
sachant que la mémoire est une mémoire non sûre, et
sachant que la mémoire non sûre est comprise par une commande standard (100) non sûre.

6. Système d'automatisation selon la revendication précédente, **caractérisé en ce que** la commande standard non sûre est conçue pour traiter les informations de restauration enregistrées et pour extraire de sa mémoire les modules logiques et de paramètres ainsi que les informations à sécurité intégrée et pour assembler respectivement une fonction de sécurité pour chaque appareil sûr et pour transmettre chacune des fonctions de sécurité en l'adressant à l'appareil sûr respectivement défini.

7. Système d'automatisation selon la revendication précédente, **caractérisé en ce que** l'appareil sûr respectivement défini est conçu pour demander la transmission d'une fonction de sécurité.

8. Système d'automatisation selon l'une des revendications précédentes, **caractérisé en ce que** parmi un certain nombre de modules logiques identiques, respectivement un seul module est enregistré dans la mémoire.
